# EUROPÄISCHE PATENTANMELDUNG

(11) **EP 0 587 934 A1**
(43) Veröffentlichungstag der Anmeldung: **23.03.1994**
(21) Anmeldenummer: 92115936.4
(22) Anmeldetag: 18.09.1992
(51) Int. Cl.: G01C 17/38

(54) **Kompasskompensation mit positionsunabhängigem Winkelmesssystem**

(71) Anmelder: TEST - FUCHS Ing. Fritz Fuchs Ges.m.b.H., A-3812 Gross-Siegharts (AT)
(72) Erfinder: Fuchs, Ingo, Dipl.-Ing., A-3812 Gross Siegharts (AT)

(57) **Zusammenfassung**

Bei diesem Winkelmeßsystem, das zum Kompensieren von Kompaßanlagen in Flugzeug bzw. Hubschrauber dient, kommen ein am Boden montierter inkrementaler Winkelgeber [8] und ein am Flugzeug montierter inkrementaler Winkelgeber [6], die mit einer Teleskopstange [4] verbunden sind, zum Einsatz.

Durch Einsatz dieses Meßsystems muß das Flugzeug bzw. der Hubschrauber nicht mehr exakt im Zentrum positioniert werden, um den richtigen Wert der absoluten Abweichung von der Nordrichtung zu erhalten. Das geschieht dadurch, daß beide Winkelwerte der beiden Winkelgeber voneinander subtrahiert werden.

An der Teleskopstange [4] montierte Endschalter ermöglichen akustische Warnungen bzw. Abschaltungen, mit linearen Weggebern ist auch eine Automatiksteuerung des Schleppgerätes auf dem Idealkreis möglich.

## Beschreibung

Die Erfindung betrifft ein positionsunabhängiges Winkelmeßsystem für Flugzeuge während des Kompensiervorganges (Kompensieren von Kompaßanlagen im eingebauten Zustand), bei dem jeweils ein inkrementaler Winkelgeber am Boden sowie am Flugzeug, verbunden mit einer Teleskopstange, montiert ist.

Die üblicherweise angewandte Methode besteht darin, daß Flugzeuge und Hubschrauber mittels Plattformen resp. Schleppgeräten um ihre Hochachse im Kreis gedreht, und mittels optischen Visiereinrichtungen nach Norden vermessen werden.

Der Nachteil dieser Methode besteht darin, daß jede Abweichung vom Drehmittelpunkt auch einen Winkelfehler bei der Vermessung eines außenliegenden Punktes nach sich zieht, und das genaue Zentrieren des Flugzeuges nur mit großem Aufwand durchgeführt werden kann.

Den Nachteil eines Winkelfehlers bzw. eines großen Flugzeugzentrieraufwandes will diese Erfindung beheben.

Durch Einsatz dieser Erfindung auf einer Kompensierplattform muß das Flächenflugzeug oder der Hubschrauber nicht mehr exakt im Zentrum positioniert werden.

Schleppgeräte können das Flugzeug je nach Ausführung der Teleskopstange mit einer Abweichung von z. B. ± 500 mm vom idealen Mittelpunkt drehen. Zusätzlich an der Teleskopstange montierte Endschalter ermöglichen akustische Warnungen oder Antriebsabschaltungen. Bei Verwendung von linearen Weggebern ist auch eine Automatiksteuerung des Schleppgerätes auf dem Idealkreis möglich.

Zusammenfassend sind durch diese Erfindung im wesentlichen folgende Vorteile anzumerken:
Winkelmeßfehler werden vermieden, da die Mittelposition nicht mehr in die Meßgenauigkeit eingeht
^{*} Komplizierte Schleppvorgänge können auf 1 Mann Bedienung reduziert werden
^{*} Allwettereinsatz (z. B. bei Schnee, Nebel, Frost etc.) ist möglich

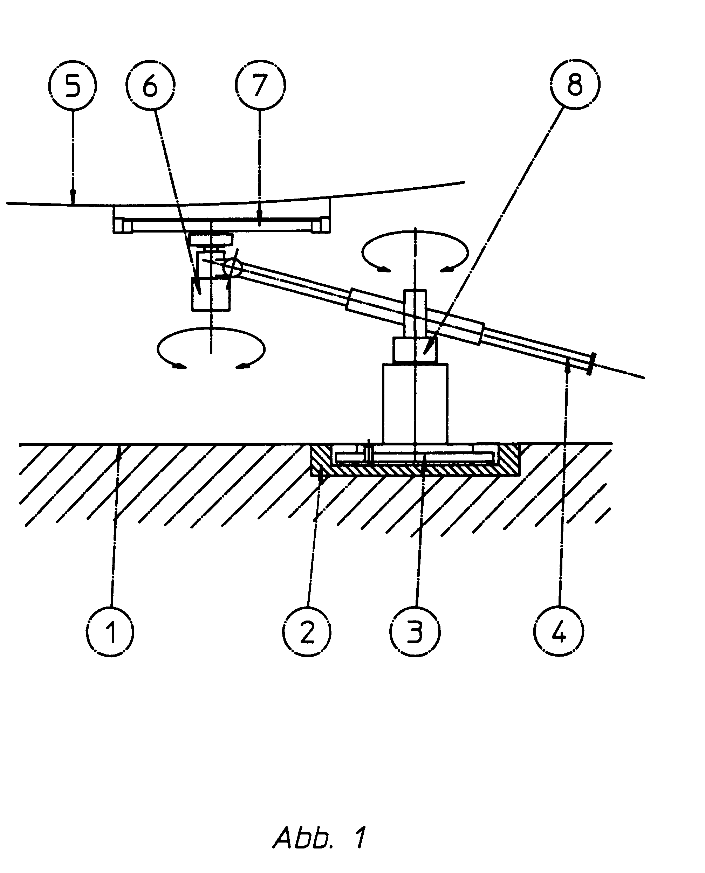

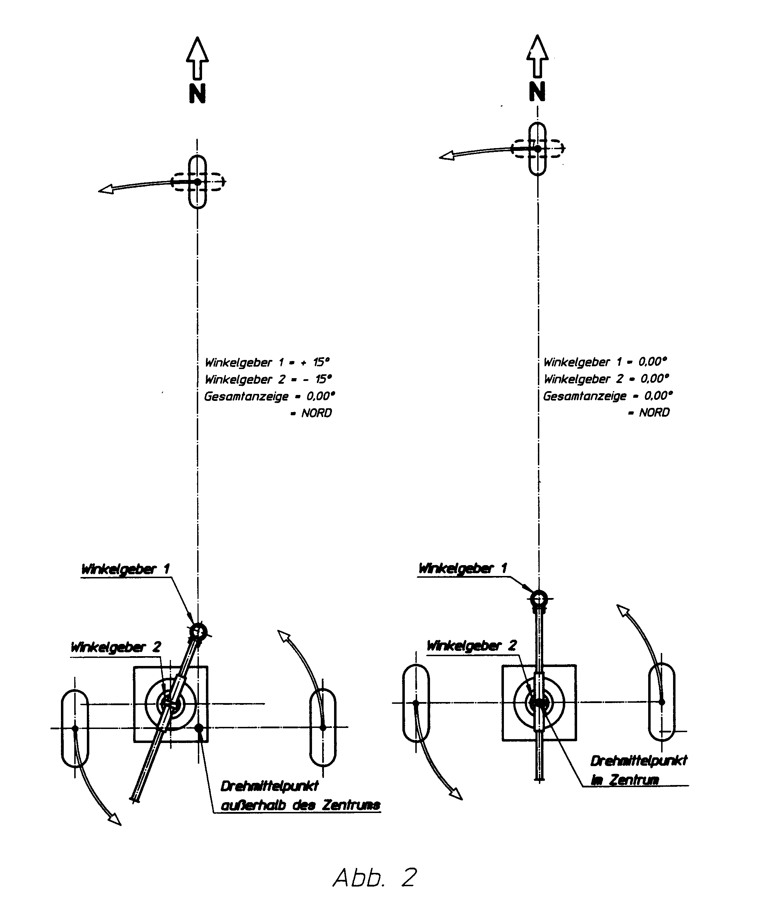

^{*} Der Kompensiervorgang wird wesentlich vereinfacht und beschleunigt.
Im folgenden wird die Erfindung anhand der Abbildungen 1 und 2 näher erläutert.

Die Abbildung 1 zeigt im verkleinerten Maßstab eine Seitenansicht des Winkelmeßsystems.

Die Abbildung 2 zeigt in der Draufsicht den Kompensiervorgang mit Drehpunkt im Zentrum bzw. außerhalb des Zentrums.

In den Abbildungen ist ein positionsunabhängiges Winkelmeßsytem dargestellt. Eine Grundplatte [2] wird in die Kompensierfläche [1] einbetoniert. Mittels Nivellierplatte [3] wird das System einmalig nach Norden ausgerichtet. Der Inkrementalwinkelgeber [8] wird direkt über die Nivellierplatte [3] am Boden befestigt. Der Inkrementalwinkelgeber [6] wird mittels Adaption [7] am Flugzeug bzw. Hubschrauber [5] befestigt. Beide Winkelgeber sind über eine schwenkbare Teleskopstange [4] miteinander verbunden.

Nach elektronischer Nullung der Anzeige mittels Codierschalter (z. B. einmal jährlich nach Neuvermessen des Platzes) zeigt das System nach Überfahren der stationären Referenzmarke der beiden Winkelgeber durch Subtraktion der beiden Winkelwerte jeweils die absolute Anweichung von der Nordrichtung an.

Abbildung 2 zeigt die Wirkungsweise des Sytems im Beispiel Drehmittelpunkt im Zentrum
Winkelgeber 1 = 0,00
Winkelgeber 2 = 0,00
Gesamtanzeige = 0,00 • Nord
sowie Drehmittelpunkt außerhalb des Zentrums
Winkelgeber 1 = + 15
Winkelgeber 2 = - 15
Gesamtanzeige = 0,00 • Nord

## Patentansprüche

1. Positionsunabhängiges Winkelmeßsystem für Flugzeug-Kompensiervorgänge, bei dem ein Inkremental-Winkelgeber [8] über Nivellierplatte [3] am Boden und ein Inkrementalwinkelgeber [6] über Adaption [7] am Flugzeug bzw. Hubschrauber [5] befestigt ist. Beide Inkremental-Winkelgeber sind mit einer Teleskopstange [4] miteinander verbunden.
Nach einmaliger Ausrichtung dieses Systems mittels Nivellierplatte [3] nach Norden und elektronischer Nullung der Anzeige mittels Codierschalter zeigt dieses System nach Überfahren der stationären Referenzmarken der beiden Winkelgeber durch Subtraktion der beiden Winkelwerte jeweils die absolute Abweichung von der Nordrichtung an, unabhängig, ob der Drehmittelpunkt im Zentrum oder außerhalb des Zentrums liegt.
Eine Ausstattung der Teleskopstange [4] mit Endschaltern ermöglicht eine akustische Warnung bzw. eine Antriebsabschaltung bei Erreichen der maximalen Abweichung. Die Verwendung von linearen Weggebern ermöglicht eine Automatiksteuerung des Schleppgerätes auf den Idealkreis.
